# EUROPÄISCHE PATENTSCHRIFT

(11) **EP 2 309 430 B1**
(45) Veröffentlichungstag und Bekanntmachung des Hinweises auf die Patenterteilung: **07.01.2015**
(21) Anmeldenummer: 09175914.2
(22) Anmeldetag: 13.11.2009
(51) Int. Cl.: G06K 19/077

(54) **Adapter für eine Mini-UICC-Karte**
Adapter for a mini UICC card
Adaptateur pour une mini-carte UICC

(30) Priorität: 30.09.2009 DE 102009043477
(43) Veröffentlichungstag der Anmeldung: 13.04.2011
(73) Patentinhaber: Cairon Group GmbH, 33098 Paderborn (DE)
(72) Erfinder: Pannhorst, Stephan, 33659 Bielefeld (DE)
(74) Vertreter: Ostermann, Thomas

(56) Entgegenhaltungen:
- WO-A2-2006/003548
- DE-A1- 19 922 063
- DE-A1-102005 043 585
- US-A1- 2009 040 695

## Beschreibung

Die Erfindung betrifft ein System aus Adapter und Mini-UICC-Karte nach dem Oberbegriff des Patentanspruchs 1.

Aus der EP 1 769 429 B1 ist ein Adapter für eine Mini-UICC-Karte bekannt, der das genormte Format einer Plug-In-UICC-Karte mit der Dimension 15 mm x 25 mm x 0,76 mm aufweist. Zur Kennzeichnung des Adapters ist eine Ecke desselben abgeschnitten ausgebildet, wobei das imaginäre ausgeschnittene gleichschenklige Dreieck eine Schenkellänge von 3 mm aufweist. Die Mini-UICC-Karte ist eine Chipkarte der dritten Generation und wird auch als Plug 3G-Karte genannt und weist gegenüber dem Adapter eine reduzierte Dimension mit dem Format 15 mm x 12 mm x 0,76 mm auf. Eine Ecke der Mini-UICC-Karte ist ebenfalls zur Kennzeichnung abgeschnitten ausgebildet, wobei das imaginäre ausgeschnittene gleichschenklige Dreieck eine Schenkellänge von 2,5 mm aufweist. Damit die Mini-UICC-Karte auch in Aufnahmen von Mobiltelefonen eingesetzt werden kann, die in herkömmlicher Weise zur Aufnahme von größeren Karten des Plug-In-UICC-Formats ausgelegt ist, wird die bekannte Mini-UICC-Karte in eine Öffnung des Adapters eingesetzt, so dass sie formschlüssig an inneren Randseiten des Adapters gehalten ist. Zu diesem Zweck weisen die inneren Randseiten des Adapters sowie Randseiten der Mini-UICC-Karte eine Profilierung auf. Die innere Randseite des Adapters bzw. die korrespondierende Randseite der Mini-UICC-Karte kann beispielsweise im Querschnitt bogenförmig oder dreieckförmig verlaufen. Nachteilig an dem bekannten Adapter ist, dass die Mini-UICC-Karte zum unerwünschten Entfernen aus der Öffnung des Adpaters neigen kann. Dies kann insbesondere dann auftreten, wenn Einschübe der Mobiltelefone eine relativ starke Biegung des Adapters beim Einsetzen oder Entnehmen desselben erfordern.

Aus der US 2009/0040695 A1 ist ein Adapter mit einer Öffnung bekannt, auf dessen Rückseite eine Klebefolie aufgebracht ist. Die Klebefolie weist eine kleinere Öffnung auf als die des Adapters, so dass eine Mini-UICC-Karte innerhalb der Öffnung haftende Anlage an der Klebefolie gehalten ist.

Aus der DE 10 2005 043 585 A1 ist ein Adapter mit einer Öffnung bekannt, in die eine Mini-UICC-Karte kraftsohlüssig gehalten ist. Flachseiten des Adapters weisen keine Verlängerung auf, die in den Bereich der Öffnung hineinreichen.

Aus der DE 199 22 063 A1 ist ein Adapter mit einer Öffnung bekannt, die Abmessungen der Öffnung derart bemessen sind, dass diese für eine einzusetzende Karte ein Pass- bzw. Klemmpassung darstellt, so dass die Karte im Adapter durch Klemmkräfte gehalten wird.

Aufgabe der Erfindung ist es daher, ein System aus Adapter und Mini-UICC-Karte derart weiterzubilden, dass auf kostengünstige und einfache Weise der Einsatz von Mini-UICC-Karten in Mobiltelefonen mit Aufnahmen unterschiedlicher Dimension verbessert wird. Insbesondere soll das unerwünschte Entfernen der Mini-UICC-Karte aus der Öffnung des Adapters beim Einsetzen in die Aufnahme des Mobiltelefons bzw. beim Herausnehmen aus derselben verhindert werden.

Zur Lösung dieser Aufgabe weist die Erfindung die Merkmale des Patentanspruchs 1 auf.

Nach der Erfindung ist ein Adapter und/oder eine Mini-UICC-Karte aus einem solchen Material hergestellt, dass ein zuverlässiges und sicheres Einsetzen der Mini-UICC-Karte in den Adapter einerseits und des Adapters in die entsprechende Aufnahme des Mobiltelefons andererseits gewährleistet ist.

Nach der Erfindung besteht der Adapter und/oder die Mini-UICC-Karte aus einem Kunststoff oder Kunststoffverbundmaterial. vorteilhaft weisen der Adapter sowie die Mini-UICC-Karte eine solche Stabilität auf, dass die Mini-UICC-Karte durch Eigenspannung in der Öffnung des Adapters gehalten ist, so dass vorzugsweise die innere Randseite des Adapters bzw. die Randseite der Mini-UICC-Karte eben bzw. senkrecht zu den entsprechenden Flachseiten des Adapters bzw. der Minz-UICC-Karte verlaufen können. Die Mini-UICC-Karte ist im Vergleich zur Öffnung des Adapters derart dimensioniert, dass sie in den eingesetzten Zustand durch Einklipsen oder Rasten verbracht werden kann. Eine Breite bzw. Länge der Mini-UICC-Karte kann im eingesetzten Zustand im wesentlichen gleich sein zu der Breite bzw. Länge derselben im nicht eingesetzten Zustand. Nach der Erfindung weist eine zweite Flachseite des Adapters eine teilweise Bodenfläche auf, so dass ein Durchbrechen der Mini-UICC-Karte quer zur Erstreckung der Öffnung, und zwar in. Richtung der zweiten Flachseite sicher verhindert wird. Vorteilhaft befindet sich die zweite Flachseite des Adapters auf einer der Aufnahme des Mobiltelefons zugewandten Seite, so dass ein Herausbrechen der Mini-UICC-Karte beim gebogenen Einsetzen des Adapters in die Aufnahme des Mobiltelefons sicher verhindert wird.

Weitere Vorteile der Erfindung ergeben sich aus den weiteren Unteransprüchen.

Ausführungsbeispiele der Erfindung werden nachfolgend anhand der Zeichnungen näher erläutert.

Es zeigen:
- Figur 1: eine Draufsicht auf einen Chipkartenträger mit einem integrierten Adapter nach einer ersten Ausführungsform,
- Figur 2: eine perspektivische Darstellung des Adapters gemäß Figur 1,
- Figur 3: eine Draufsicht auf den Adapter gemäß Figuren 1 und 2,
- Figur 4a: einen teilweisen Längsschnitt durch den Adapter gemäß Figur 3 entlang der Schnittlinie IV-IV,
- Figur 4b: einen teilweisen Längsschnitt durch den Adapter gemäß Figur 3 entlang der Schnittlinie IV-IV mit eingesetzter Mini-UICC-Karte,
- Figur 5: eine perspektivische Darstellung eines ersten Beispiels eines Adapters und
- Figur 6: eine perspektivische Darstellung eines zweiten Beispiels eines Adapters.

Ein Chipkartenträger 1 weist das Format 54 mm x 85 mm x 0,76 mm entsprechend der ISO-Norm 7816 auf. Über vier Verbindungsstege 2 ist ein Adapter 3 mit einem Kartenkörper 4 des Chipkartenträgers 1 verbunden. Der Adapter 3 weist eine erste Flachseite 5 als Oberseite und eine parallel zu derselben verlaufenden zweite Flachseite 6 als Unterseite auf, die jeweils bündig zu den entsprechenden Flachseiten des Kartenkörpers 4 verlaufen. Der Adapter 3 weist das Format Plug-In-UICC mit den Maßen 15 mm x 35 mm x 0,76 mm auf zum Einsetzen in Aufnahmen herkömmlicher Mobiltelefone. Der Adapter 3 weist eine Öffnung 7 auf, in die eine Mini-UICC-Karte 8 einsetzbar ist, die als Karte der dritten Generation "Plug-3G" das Format 15 mm x 12 mm x 0,76 mm aufweist. Die Mini-UICC-Karte 8 wird vorzugsweise nach Spritzgießen des Chipkartenträgers 1 mit dem integrierten Adapter 3 in die Öffnung 7 des Adapters 3 eingesetzt und kann dann an die entsprechenden Kunden versandt werden. Beispielsweise kann der Kartenkörper 4 des Chipkartenträgers 1 eine Beschriftung aufweisen, die als Information für den Kunden dient. Vorzugsweise sind der Adapter 3 und der Kartenkörper 4 aus demselben Material hergestellt. Alternativ kann durch ein 2-Komponenten-Spritzgießverfahren der Adapter 3 auch aus einem anderen Material bestehen als der Kartenkörper 4.

Durch Herausbrechen des Adapters 3 unter Brechen der Verbindungsstege 2 kann der Adapter 3 zusammen mit der integrierten Mini-UICC-Karte 8 in Aufnahmen herkömmlicher Mobiltelefone eingesetzt werden. Falls das Mobiltelefon eine Aufnahme der dritten Generation Plug-3G aufweist, wird die Mini-UICC-Karte 8 aus dem Adapter 3 herausgedrückt und dann in die entsprechende Aufnahme des Mobiltelefons eingesetzt.

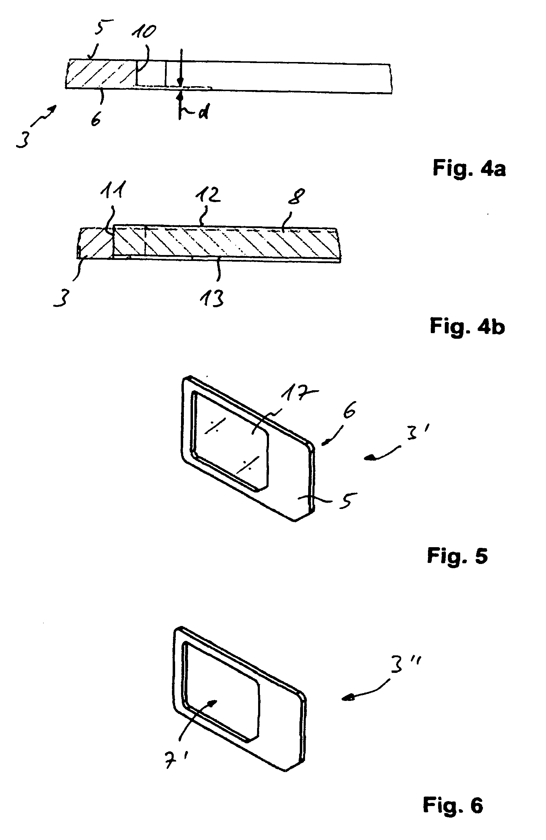

Falls die Mini-UICC-Karte 8 in eine Aufnahme eines Mobiltelefons eingesetzt werden soll, das für Karten der Plug-In-UICC-Norm ausgebildet ist, wird die Mini-UICC-Karte 8 in die Öffnung 7 des Adapters 3 eingeklipst bzw. eingerastet. Wie aus den Figuren 4a und 4b deutlich wird, sind sowohl innere Randseiten 10 des Adapters 3 als auch Randseiten 11 der Mini-UICC-Karte 8 eben und senkrecht zu der ersten Flachseite 5 bzw. zweiten Flachseite 6 des Adapters 3 bzw. einer ersten Flachseite 12 bzw. einer zweiten Flachseite 13 der Mini-UICC-Karte 8 ausgebildet. In der eingesetzten Position der Mini-UICC-Karte 8 wirken entgegengesetzt gerichtete Haltekräfte, die sich jeweils quer zu den inneren Randseiten 10 des Adapters 3 bzw. 11 der Mini-UICC-Karte 8 erstrecken. Die inneren Randseiten 10 des Adapters 3 liegen unmittelbar und flächig an den Randseiten 11 der Mini-UICC-Karte 8 an. Vorzugsweise ist eine Länge L und eine Breite B der Mini-UICC-Karte 8 gleich oder etwas größer als die korrespondierende Länge L bzw. Breite B der Öffnung 7 des Adapters 3. In der eingesetzten Position der Mini-UICC-Karte 8 befindet sich dieselbe in einer Presspassung, wobei die entsprechenden inneren Randseiten 10 auf die korrespondierenden Randseiten 11 der Mini-UICC-Karte 8 drücken.

Der Adapter 3 und die Mini-UICC-Karte 8 sind aus einem hochfesten Kunststoff- oder Kunststoffverbundmaterial hergestellt. Vorzugsweise sind der Adapter 3 und die Mini-UICC-Karte 8 aus einem faserverstärkten Material, insbesondere aus einem faserverstärkten Kunststoff- oder Kunststoffverbundmaterial hergestellt. Das Material weist eine solche Biegefestigkeit und/oder Härte auf, dass auch bei Biegung des Adapters 3 um eine Querachse Q in einem Winkelbereich von 0° bis 20° ein selbständiges Entfernen aus der Öffnung 7 der Mini-UICC-Karte 8 verhindert wird.

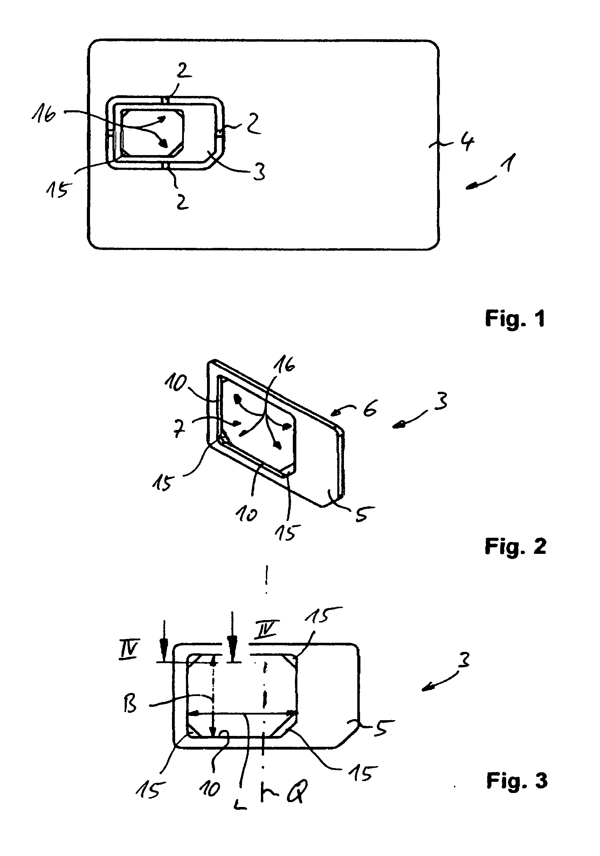

Nach einer Ausführungsform des Adapters 3 gemäß der Figuren 1 bis 4b weist die zweite Flachseite 6 eine verstärkende Verlängerung auf, die als ein Eckzwickel 15 ausgebildet ist und der eine teilweise Bodenfläche bildet. Die Eckzwickel 15 sind jeweils in Eckbereichen 16 des Adapters 3 angeordnet und weisen eine Dicke d im Bereich von 0,05 mm bis 0,15 mm auf. Sie weisen somit eine Wandstärke auf, dass ein unerwünschtes Durchbrechen der Mini-UICC-Karte 8 entlang einer Normalen der Öffnungsfläche 7 in Richtung der zweiten Flachseite 6 verhindert wird. Insbesondere beim gegebenenfalls notwendigen Verbiegen des Adapters 3 sowie der Mini-UICC-Karte 8 beim Einsetzen und beim Herausnehmen derselben in bzw. aus dem Mobiltelefon kann hierdurch ein Herausbrechen verhindert werden. Die Dicke der inneren Randseiten des Adapters 3 bzw. der Randseiten 11 der Mini-UICC-Karte 8 liegen in einem Bereich zwischen 0,7 mm und 0,8 mm.

Nach einem Beispiel eines weiteren Adapters 3' gemäß Figur 5 kann die Öffnung 7 auch mit einer durchgehenden Bodenfläche 17 versehen sein, die sich in einer verstärkenden Verlängerung der zweiten Flachseite 6 des Adapters 3' erstreckt.

Im Vergleich zu dem vorhergehenden Ausführungsbeispiel unterscheidet das Adapter 3' lediglich durch die durchgehende Bodenfläche 17, die die gleiche Wandstärke aufweist wie die Eckzwickel 15 des Adapters 3.

Gleiche Bezugszeichen bzw. Bauteilfunktionen des Ausführungsbeispiel und des weiteren Beispiels sind mit den gleichen Bezugszeichen versehen.

Nach einem anderen Beispiel gemäß Figur 6 kann ein Adapter 3" auch eine Öffnung 7' aufweisen, deren Dimension im Wesentlichen mit dem Format der Mini-UICC-Karte 8 übereinstimmt. Die Mini-UICC-Karte 8 kann somit von beiden Flachseiten 5, 6 her in die Öffnung 7' eingeklipst bzw. herausgenommen werden. Bei dieser Ausführungsform der Erfindung muss die Presspassung so hoch sein, dass beim Verbiegen des Adapters 3'' zusammen mit der Mini-UICC-Karte 8 kein unerwünschtes Entfernen derselben erfolgen kann.

Nach einem nicht dargestellten weiteren Beispiel kann die Bodenfläche 17 des Adapters 3' auch in einem mittleren Bereich eine Öffnung aufweisen, so dass durch manuelles Drücken der Mini-UICC-Karte 8 durch dieses Fenster einer erleichtertes Entfernen aus der Adapteröffnung ermöglicht wird.

Die Mini-UICC-Karte 8 sowie die Adapter 3, 3', 3''sowie der Kartenkörper 4 des Chipkartenträgers 1 bestehen vorzugsweise aus dem gleichen Material.

## Patentansprüche

1. System aus einem Adapter und einer Mini-UICC-Karte (8), wobei der Adapter (3,) in einer Ausnahme eines Mobiltelefones einsatzbar ist, die größer ist als die Mini-UICC-Karte (8), dass der Adapter (3, 3', 3") eine erste Flachseite (5), eine parallel zu derselben verlaufende zweite Flachseite (6) und eine Öffnung (7) aufweist, wobei ebene Randseiten (11) der Mini-UICC-Karte (8) an ebene innere Randseiten (10) des Adapters (3) anlegbar sind, , dass der Adapter (3, 3', 3") und/oder die Mini-UICC-Karte (8) aus einem solchen hochfesten Kunststoff- oder Kunststoffverbundmaterial hergestellt sind, dass die Mini-UICC-Karte (8) unter Bildung einer Presspassung kraftschlüssig in der Öffnung (7) des Adapters (3, 3', 3") gehalten ist, **dadurch gekennzeichnet, dass** die zweite Flachseite (6) das Adapters (3, 3', 3") als eine teilweise Bodenfläche (15) ausgebildet ist, so dass die Mini-UICC-Karte (8) in der eingesetzten Stellung derselben nicht quer zur Erstreckung der Öffnung (7) in Richtung der zweiten Flachseite (6) zugewandten Seite des Adapters (3) entfernbar ist.

2. System nach Anspruch 1, **dadurch gekennzeichnet, dass** der Adapter (3, 3', 3") und/oder die Mini-UICC-Karte (8) aus einem faserverstärkten Kunststoff- oder Kunststoffverbundmaterial besteht.

3. System nach einem der Ansprüche 1 bis 3, **dadurch gekennzeichnet, dass** die inneren Randseiten (10) des Adapters (3, 3', 3") und die Randseiten (11) der Mini-UICC-Karte (8) senkrecht zu der ersten Flachseite (5) und der zweiten Flachseite (6) des Adapters (3, 3', 3") bzw. der Mini-UICC-Karte (8) verlaufen.

4. System nach einem der Ansprüche 1 bis 3, **dadurch gekennzeichnet, dass** die Mini-UTCC-Karte (8) in die Öffnung (7, 7') des Adapters (3, 3', 3") einklipsbar oder einrastbar ist.

5. System nach einem der Ansprüche 1 bis 4, **dadurch gekennzeichnet, dass** die teilweise Bodenfläche durch Eckzwickel (J.5) jeweils in den Eckbereichen (16) der Öffnung (7) ausgebildet ist.

6. System nach Anspruch 5, **dadurch gekennzeichnet, dass** die Eckzwickel (15) eine Dicke (d) im Bereich von 0,05 mm bis 0,15 mm aufweisen.

## Claims

1. A system comprising an adapter and a mini-UICC card (8), wherein in the adapter (3,) can be inserted into the receptacle of a mobile phone, said receptacle being larger than the mini-UICC card (8), the adapter (3, 3', 3") having a first flat side (5), a second flat side (6) extending in parallel to said first flat side and an opening (7), wherein planar edge sides (11) of the mini-UICC card (8) can be placed against planar inner edge sides (10) of the adapter (3), the adapter (3, 3', 3") and/or the mini-UICC card (8) being made of a high-strength plastic or plastic compound material such that the mini-UICC card (8) is friction-locked by forming a press fit inside the opening (7) of the adapter (3, 3', 3"), **characterized in that** the second flat side (6) of the adapter (3, 3', 3") is designed as a partial bottom surface (15) so that the mini-UICC card (8) in its inserted position cannot be removed transversely to the extension of the opening (7) in the direction of the side of the adapter (3) that faces the second flat side (6).

2. The system of claim 1, **characterized in that** the adapter (3, 3', 3") and/or the mini-UICC card (8) consist of a fibre-reinforced plastic or plastic compound material.

3. The system of any one of claims 1 to 3, **characterized in that** the inner edge sides (10) of the adapter (3, 3', 3") and the edge sides (11) of the mini-UICC card (8) extend perpendicular to the first flat side (5) and the second flat side (6) of the adapter (3, 3', 3") and/or the mini-UICC card (8).

4. The system of any one of claims 1 to 3, **characterized in that** the mini-UICC card (8) can be clipped or snapped into the opening (7, 7') of the adapter (3, 3', 3").

5. The system of any one of claims 1 to 4, **characterized in that** the partial bottom surface is formed by corner spandrels (15) formed in each of the corner areas (16) of the opening (7).

6. The system of claim 5, **characterized in that** the corner spandrels (15) have a thickness (d) ranging from 0.05 mm to 0.15 mm.

## Revendications

1. Système consistant en un adaptateur et une carte mini UICC (8), sachant que l'adaptateur (3) peut être inséré dans un logement d'un téléphone mobile qui est plus grand que la carte mini UICC (8), l'adaptateur (3, 3', 3") présentant une première face plate (5), une deuxième face plate (6), qui s'étend parallèlement à celle-ci, et une ouverture (7), sachant que des faces latérales planes (11) de la carte mini UICC (8) peuvent être appliquées sur les faces latérales, intérieures, planes (10) de l'adaptateur (3), l'adaptateur (3, 3', 3") et / ou la carte mini UICC (8) étant fabriqués en matière synthétique ou en matériau composite synthétique à haute résistance de sorte que la carte mini UICC (8) soit maintenue, pressée, dans l'ouverture (7) de l'adaptateur (3, 3', 3") par ajustement serré,
**caractérisé en ce que** la deuxième face plate (6) de l'adaptateur (3, 3', 3") est réalisée en tant que surface de fond partielle (15) de telle manière que la carte mini UICC (8) insérée ne puisse pas être retirée, transver-salement par rapport à l'étendue de l'ouverture (7), dans la direction de la face de l'adaptateur (3) orientée vers la deuxième face plate (6).

2. Système selon la revendication 1,
**caractérisé en ce que** l'adaptateur (3, 3', 3") et / ou la carte mini UICC (8) consistent en une matière synthétique renforcée par des fibres ou en un matériau synthétique composite.

3. Système selon l'une des revendications 1 à 2,
**caractérisé en ce que** les faces latérales, intérieures (10) de l'adaptateur (3, 3', 3") et les faces latérales (11) de la carte mini UICC (8) s'étendent perpendiculairement par rapport à la première face plate (5) et à la deuxième face plate (6) de l'adaptateur (3, 3', 3"), respectivement de la carte mini UICC (8).

4. Système selon l'une des revendications 1 à 3,
**caractérisé en ce que** la carte mini UICC (8) peut être clipsée ou encliquetée dans l'ouverture (7, 7') de l'adaptateur (3, 3', 3").

5. Système selon l'une des revendications 1 à 4,
**caractérisé en ce que** la surface de fond partielle est formée par des goussets angulaires (15) qui sont respectivement pratiqués dans les coins (16) de l'ouverture (7).

6. Système selon la revendication 5,
**caractérisé en ce que** les goussets angulaires (15) présentent une épaisseur (d) située dans un domaine allant de 0,05 mm jusqu'à 0,15 mm-
